# EUROPEAN PATENT APPLICATION

(11) **EP 1 318 690 A1**
(43) Date of publication of application: **11.06.2003**
(21) Application number: 02102669.5
(22) Date of filing: 02.12.2002
(51) Int. Cl.: H04Q 7/38

(54) **Call control method and arrangement**

(30) Priority: 05.12.2001 FI 20012404
(71) Applicant: Nokia Corporation, 02150 Espoo (FI)
(72) Inventor: Oikarinen, Esko, 90160 Oulu (FI); Timonen, Juha, 90800 Oulu (FI)
(74) Representative: Brockman, Pertti Erik

(57) **Abstract**

An object of the invention is a call control method for user equipment (170) which can be in connection with more than one radio system (130, 160). The user equipment is under a first radio system (160). In the method, a first system (160) detects that there is a need to transfer data to the user equipment. A paging message is transmitted (410) from the first radio system to the user equipment, the message containing a command to move over to the cell of a second radio system (130). Reselection of the cell is started (412) in the user equipment on the basis of the message.

## Description

### FIELD

The invention relates to a call control method for user equipment which can be in connection with more than one radio system.

### BACKGROUND

Digital radio systems in wide use today are generally called second-generation systems, the first generation being the analogue systems that are not used that much any longer. New digital third-generation radio systems currently under development are designed in such a way that it is possible to design and construct user equipment being capable of setting up a connection and communicating with both the second and third generation systems without problems.

Examples of radio systems are the second-generation GSM (Global System for Mobile Communication) and its packet-traffic-based extension GPRS (General Packet Radio Service) and the third-generation UMTS system (Universal Mobile Telecommunication System). These systems are very well compatible even to such an extent that the handover between them succeeds without the call or connection to be disconnected. Also, such user equipment has been designed that can operate in more than one second-generation system, and in both second and first generation systems.

Let us study the UMTS system as an example. In accordance with UMTS specifications, the user equipment can have an RRC connection to a radio system without there being any resources reserved for the user equipment for transferring user data. Such protocol states include CELL_PCH and URA_PCH states. In these states, the base station can transmit messages to the user equipment on a PCH channel, for instance when there is a need to start allocation of radio resources for data transmission. In such a case, the base station transmits what is called a paging message to the user equipment; having received the message, the user equipment starts a cell updating process and moves over to the CELL_FACH state, in which it has bidirectional radio connection to the base station, data transmission being thus possible. A paging message can also be transmitted to the user equipment when there is a need to update information of the user equipment on the system.

In some cases it is possible that the system, in this case the UMTS, cannot, for example due to the congestion in the network, provide the user equipment with the data transmission services it would need, such as a channel that would be sufficiently quick. Hereby, cell reselection to a parallel GPRS network cell having available capacity is started in the system, controlled by the network. This leads to a lot of signalling between the user equipment and the base station, which increases the load of the network.

A corresponding situation may naturally also arise in the GPRS network, where the user equipment, when being in the idle mode, sets up a connection to the network on the basis of the paging message, after which reselection of the cell to the UMTS system may have to be made.

### BRIEF DESCRIPTION OF THE INVENTION

An object of the invention is to implement a method and an apparatus implementing the method in such a way that reselection of the cell between radio systems can, if required, be implemented more flexibly and with a smaller network load. This is achieved with a method of call control for user equipment which can be in connection with more than one radio system, which user equipment is under a first radio system and in which method the first system detects that there is a need to transfer data to the user equipment. In the method according to the invention, a paging message is transmitted from the first radio system to the user equipment, the message containing a command to move over to the cell of a second radio system; reselection of the cell is started in the user equipment on the basis of the message.

An object of the invention is also an arrangement for performing call control between the first and the second radio system for the user equipment, which comprises means for being in connection with the first and the second radio system; means in the radio system for detecting a need to transfer data to the user equipment; means in the first system for transmitting a paging message to the user equipment having logical connection to the system, the paging message comprising a command for the user equipment to move over to the cell of the second radio system; means in the user equipment for starting a cell reselection process on the basis of the message.

Preferred embodiments of the invention are disclosed in the dependent claims of the invention.

The invention is based on the idea that the paging message is used in a new manner to start a cell reselection process. When the user equipment is in logical connection with the base station, a need arises to start data transmission between the user equipment and the system. Generally, at this stage the properties of the required connection, such as the quality and/or the transmission rate capacity, are known. In preferred embodiments of the invention, when detecting that there are difficulties in implementing the connection and knowing that there might be available capacity in a parallel system, the system sends the user equipment a paging message which comprises a command to start a cell reselection process to a parallel system.

The solution according to the invention provides a plurality of advantages. Signalling between the user equipment and the network decreases significantly. For example in the UMTS system, the user equipment does not unduly move on to the CELL_FACH state, which consumes resources, but the user-equipment-specific cell reselection to a second radio system, commanded by the radio network, can be started as early as in the CELL_PCH or URA_PCH states, which has not been possible earlier. Also, the load can be distributed over different networks more flexibly than previously.

### LIST OF FIGURES

The invention will now be described in greater detail by means of preferred embodiments, with reference to the attached drawings, in which
Figure 1 shows a simplified block diagram of the structure of radio systems;
Figure 2 shows different states of user equipment with regard to the radio resource protocol;
Figure 3 shows a preferred embodiment by means of a signalling diagram;
Figure 4 shows a preferred embodiment by means of a flow chart;
Figure 5 shows a second preferred embodiment by means of a signalling diagram;
Figure 6 shows the second preferred embodiment by means of a flow chart; and
Figure 7 shows an example of the structure of user equipment.

### DESCRIPTION OF PREFERRED EMBODIMENTS OF THE INVENTION

The invention can thus be applied to user equipment that can be in connection with more than one radio system. Radio systems that can be used include the GSM, GPRS, UMTS, CDMA2000 (Code Division Multiple Access), Bluetooth-based short-range systems and the WLAN (Wireless Local Area Network). Below, preferred embodiments will be shown using two radio systems, i.e. the GPRS and UMTS, as examples, without, however, limiting the invention to these systems, as will be obvious to a person skilled in the art.

Let us now clarify the terminology of the application. A radio system refers in this context to radio access technology of telecommunication systems, RAT, which is part of what is called an AS (Access Stratum), above which the telecommunication systems comprise a radio-independent layer NAS (Non Access Stratum), which uses services of separate radio systems.

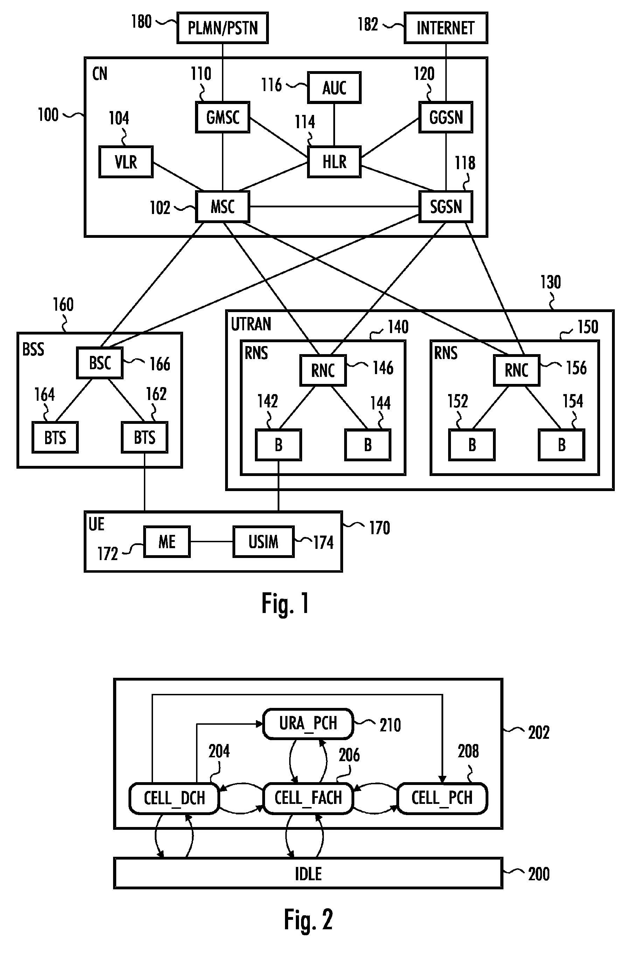

Let us study Figure 1, which both clarifies the terminology used and illustrates the structure of radio systems. Figure 1 is a simplified block diagram, which illustrates the most important parts of radio systems at network element level, and the interfaces between them. The structure and functions of the network elements are not shown in more detail, because they are generally known.

In Figure 1, a core network 100 illustrates the radio-independent layer of a telecommunication system. A first radio system, i.e. a radio access network 130, and a second radio system, i.e. a base station system BSS 160 illustrate radio systems. The figure further shows user equipment UE 170. The term UTRAN comes from the words UMTS Terrestrial Radio Access Network, in other words the radio access network 130 is implemented with a wideband code division multiple access technology, WCDMA. The base station system 160 is implemented with time division multiple access technology, TDMA.

On a general level, the radio system can also be defined to comprise user equipment, which is also known as a subscriber terminal and mobile phone, for instance, and a network part, which comprises the fixed infrastructure of the radio system, i.e. radio access network or base station system.

The structure of the core network 100 corresponds to a combined structure of the GSM and GPRS systems. The GSM network elements are responsible for establishing circuit-switched connections, and the GPRS network elements are responsible for establishing packet-switched connections, some of the network elements being, however, in both systems.

A mobile services switching centre MSC 102 is the centre point of the circuit-switched side of the core network 100. The same mobile services switching centre 102 can be used to serve the connections of both the radio access network 130 and the base station system 160. The tasks of the mobile services switching centre 102 include: switching, paging, user equipment location registration, handover management, collection of subscriber billing information, encryption parameter management, frequency allocation management, and echo cancellation. The number of mobile services switching centres 102 may vary: a small network operator may only have one mobile services switching centre 102, but in large core networks 100, there may be several.

Large core networks 100 may have a separate gateway mobile services switching centre (GMSC) 110 which takes care of circuit-switched connections between the core network 100 and external networks 180. The gateway mobile services switching centre 110 is located between the mobile services switching centres 102 and the external networks 180. The external network 180 can be for instance a public land mobile network PLMN or a public switched telephone network PSTN.

A home location register (HLR) 114 contains a permanent subscriber register, i.e. the following information, for instance: an international mobile subscriber identity (IMSI), a mobile subscriber ISDN number (MSISDN), an authentication key, and when the radio system supports GPRS, a packet data protocol (PDP) address.

A visitor location register (VLR) 104 contains roaming information on user equipment 170 in the area of the mobile services switching centre 102. The visitor location register 104 contains almost the same information as the home location register 114, but in the visitor location register 104, the information is kept only temporarily.

An authentication centre 116 is physically located in the same place as the home location register 114 and contains an individual subscriber authentication key Ki, a CK (ciphering key) and a corresponding IMSI.

The network elements shown in Figure 1 are functional entities whose physical implementation may vary. Usually, the mobile services switching centre 102 and the visitor location register 104 form one physical device, and the home location register 114 and the authentication centre 116 form a second physical device.

A serving GPRS support node SGSN 118 is the centre point of the packet-switched side of the core network 100. The main task of the serving GPRS support node 118 is to transmit and receive packets with the user equipment 170 supporting packet-switched transmission by using the radio access network 130 or the base station system 160. The serving GPRS support node 118 contains subscriber information related to the user equipment 170 and location information.

A gateway GPRS support node (GGSN) 120 is the packet-switched side counterpart to the gateway mobile services switching centre 110 of the circuit-switched side with the exception, however, that the gateway GPRS support node 120 must also be capable of routing traffic from the core network 100 to external networks 182, whereas the gateway mobile services switching centre 110 only routes incoming traffic. In our example, external networks 182 are represented by the Internet.

The first radio system, i.e. the radio access network 130 is formed of radio network subsystems RNS 140, 150. Each radio network subsystem 140, 150 is formed of radio network controllers RNC 146, 156 and B-nodes 142, 144, 152, 154. A B-node is rather an abstract concept, and often the term 'base station' is used instead.

The radio network controller 146 controls the B-nodes 142, 144 under it. In principle, the intention is that the devices implementing the radio path and the functions related thereto are positioned in the B-nodes 142, 144, and the control devices are positioned in the radio network controller 146.

The radio network controller 146 attends to the following tasks, for example: radio resource management of the B-node 142, 144, inter-cell handover, frequency management, i.e. allocation of frequencies to the B-nodes 142, 144, management of frequency hopping sequences, measurement of time delays on the uplink, implementation of the operation and maintenance interface, and management of power adjustment.

The B-node 142, 144 contains one or more transceivers with which the WCDMA radio interface is implemented. Typically, the B-node serves one cell, but such a solution is also feasible in which the B-node serves several cells divided into sectors. The diameter of the cell can vary from a few metres to dozens of kilometres. The B-nodes 142, 144 have the following tasks, for example: calculation of TA (timing advance), measurements on the uplink, channel coding, encryption, decryption and frequency hopping.

The second radio system, i.e. the base station system 160, is formed of a base station controller BSC 166 and base transceiver stations BTS 162, 164. The base station controller 166 controls the base transceiver station 162, 164. In principle, the intention is that the devices implementing the radio path and the functions related thereto are positioned in the base transceiver station 162, 164, the management devices being positioned in the base station controller 166. The base station controller 166 attends substantially to the same tasks as the radio network controller.

The base transceiver station 162, 164 comprises at least one transceiver which implements one carrier wave, i.e. eight timeslots, i.e. eight physical channels. Typically, one base transceiver station 162, 164 serves one cell, but such a solution is also possible in which one base transceiver station 162, 164 serves several cells divided into sectors. Also considered a part of the base transceiver station 162, 164 is a transcoder, which performs conversion between the speech-coding mode used in a radio system and the speech-coding mode used in a public switched telephone network. In practice, however, the transcoder is in general physically located in the mobile services switching centre 102. The base transceiver station 162, 164 has the same tasks as the B-node.

The user equipment 170 consists of two parts: mobile equipment (ME) 172 and a UMTS subscriber identity module (USIM) 174. The user equipment 170 comprises at least one transceiver which implements a radio connection to the radio access network 130 or the base station system 160. The user equipment 170 can comprise at least two different subscriber identity modules. Further, the user equipment 170 comprises an antenna, a user interface and an accumulator. Presently, there are several types of user equipment 170, for instance equipment installable in a car or portable equipment.

The USIM 174 comprises information relating to the user and particularly to information security, for example an encryption algorithm.

Let us now study Figure 2, which illustrates different states of the user equipment with regard to the radio resource protocol RRC in the UMTS system. In the idle mode 200, the user equipment has neither radio connection nor logical connection to the base transceiver station. It is to be noted, however, that also in such a case, the user equipment performs measurements on signals transmitted by base transceiver stations on common channels and listens to the paging channel, for example. In a connected mode 202, as the name implies, the user equipment has a connection to the base transceiver station. In the UMTS system, the connection state can be divided into four different states. In a CELL_DCH state 204, a dedicated connection to both transmission directions is allocated to the user equipment. This state corresponds to a circuit-switched connection.

In the CELL_FACH state 206, the user equipment has no dedicated traffic channel (DCH), but packet-switched data can be transmitted using common channels. This state is particularly suitable for packet-switched connections. Since in this state the user equipment must monitor the channels all the time, it is power-consuming. For this reason, if there is no packet traffic at a particular time, the user equipment moves from the CELL_FACH state over to the CELL_PCH state.

The CELL_PCH state 208 reminds of the idle mode, but the difference is that the user equipment has logical connection to the radio network. If there is a need to transfer data, the user equipment returns to the CELL_FACH state. This takes place for instance when the base transceiver station transmits a paging message to the user equipment.

The URA_PCH state 210 is similar to the CELL_PCH state, except that contrary to the CELL_PCH state, not all cell reselections in the user equipment start the cell-updating process. The cell-updating process starts only if the UTRAN registration area URA is changed. This decreases signalling between the user equipment and the network.

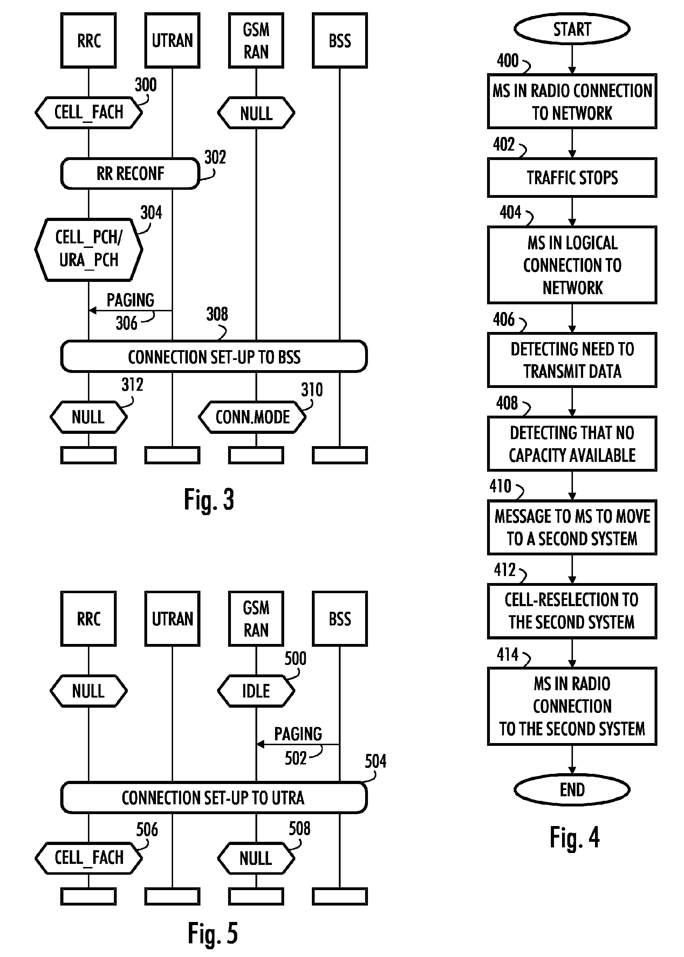

Figure 3 illustrates a preferred embodiment of the invention by means of a signalling diagram. Let us study this embodiment using also the flow diagram of Figure 4. It is assumed here that at the beginning, the user equipment is in the CELL_FACH state 300 in the UMTS system, in other words it has a radio connection 400 to the network. The user equipment can also be in the CELL-DCH state. When the packet traffic temporarily stops in step 402, the connection of the user equipment is after a predetermined time moved over 302 either to the CELL_PCH or URA_PCH state 304. This is what is called reconfiguration of an RRC connection. In step 406, the user equipment has, however, logical connection to the base transceiver station, although there is no radio connection. To be more precise, the user equipment has an RRC connection, i.e. the user equipment is still in the connected state, but the network can reach the user equipment by means of the paging channel (PCH) only.

In step 406, the network detects that there is again a need to transfer data between the user equipment and the network. If the network can provide the capacity required for the connection, the connection can be formed in accordance with the prior art. In step 408, the radio network controller RNC attending to the connection on the side of the UMTS network detects, however, that it has not the required capacity available at that moment. Thus, in a preferred embodiment of the invention it can be checked whether another system has capacity available. If it has, a paging message 306 is transmitted 410 from the network to the user equipment, which paging message comprises a command for the user equipment to start cell reselection to the cell of the second system. In step 412, the user equipment starts the cell reselection process 308 to the cell of the second system. The reselection process can be implemented in known, system-dependent manners. In step 414, the reselection process has terminated, and the user equipment is in radio connection 310 to the base transceiver station of the second system. The connection to the first base transceiver station and to the network has been disconnected 312.

A paging message according to preferred embodiments can be transmitted to more than one user equipment item. Thus, one message can reach more than user equipment item simultaneously. The message can comprise a user-equipment-specific identifier.

In a preferred embodiment, the paging message comprises information on the system to which the user equipment should move.

**Table 1**

| **Paging message** | |
|---|---|
| **Information element** | **Need** |
| Message type | Mandatory |

| **UE Information elements** | |
|---|---|
| Paging record list | Optional |
| >Paging record | Mandatory |

| **Other information elements** | |
|---|---|
| BCCH modification info | Optional |
| RAT change info | Optional |

**Table 2**

| **RAT change info** | | |
|---|---|---|
| **Information element** | **Need** | **Type** |
| RAT change info | Mandatory | |
| Target RAT | Mandatory | 3-bit character sequence |

Tables 1 and 2 show the structure of a paging message according to a preferred embodiment of the invention. Table 1 indicates a paging message in which the command to move over to the cell of the second system is included in the field 'RAT change info'. Table 2 shows the contents of this field. The field comprises information on the system to which the user equipment should move, for instance as a three-bit character string, in which the contents of the character string defines the system. In a second alternative, the message can contain more information, for example information on the second system cell to which the user equipment should move. In one embodiment, the message contains the information according to which the user equipment should utilize information on the cells of the GSM/GPRS system in the same area, sent by the UMTS base transceiver station on the BCCH channel. Further, in an embodiment, the paging message includes the need to move over to another system, expressed with, for example, only one bit, whereby the user equipment has no prior knowledge of the system to the area of which it should move.

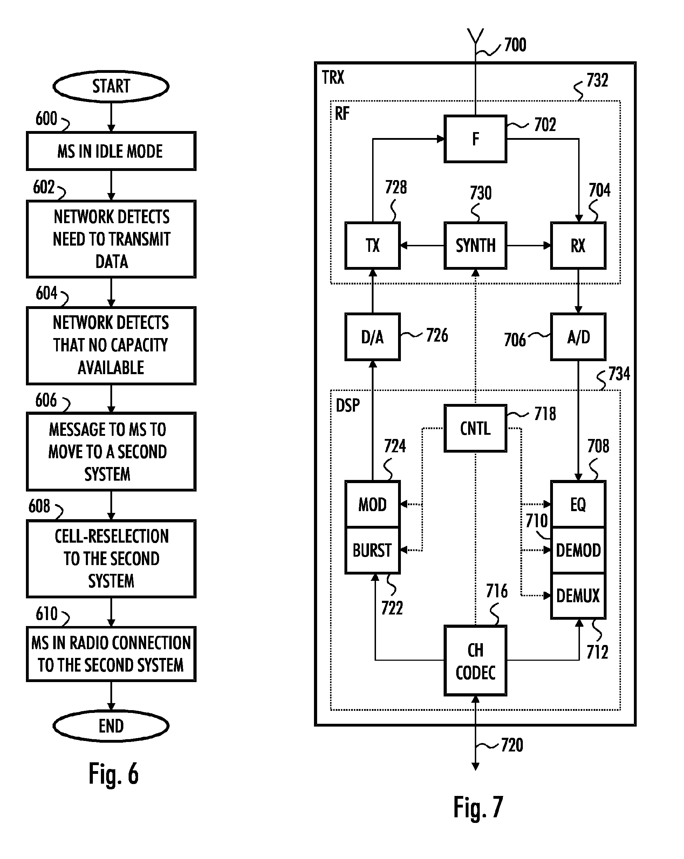

Figure 5 illustrates a preferred embodiment of the invention by means of a signalling diagram. Let us study this embodiment referring also to the flow diagram of Figure 6. Let us assume that at the beginning the user equipment is in the GSM/GPRS system in an idle mode 500, 600.

In step 602, the network detects that there is a need to transfer data between the user equipment and the network. If the network can provide the capacity required for the connection, the connection can be set up in accordance with the prior art. In step 604, the base station controller attending to the connection on the side of the GSM/GPRS network detects, however, that it has no capacity available at that moment. Thus, in a preferred embodiment, it can be checked whether a second system would have available capacity. If it has, a paging message 502 is transmitted 606 from the network to the user equipment, the paging message comprising a command for the user equipment to start reselection of the cell to the cell of the second system. In step 608 the user equipment starts the cell reselection process 504 to the cell of the second system. The reselection process can be implemented with known, system-dependent manners. The connection set-up to the UTRAN network means an RRC connection. In step 610, the reselection process has terminated and the user equipment is in radio connection 506 to the base transceiver station of the second system. The connection to the first base transceiver station and to the network has been disconnected 508. In the example of the figure, the user equipment is in the CELL_FACH state. The user equipment could also be in the CELL_DCH state.

Figure 7 illustrates the structure of equipment in such a radio system in which the solution according to preferred embodiments can be applied to. The equipment comprises an antenna 700 with which signals are transmitted and received. The signal is taken from the antenna to a duplex filter 702, which separates the signals of transmission and reception directions from each other. A receiver 704 comprises a filter which prevents the frequencies outside the desired frequency band. After that, the signal is converted into intermediate frequency or directly to baseband frequency, in which form the signal is sampled and quantified in an analogue/digital converter 706. An equalizer 708 compensates for interference, for instance interference caused by multipath propagation. A demodulator 710 takes a bit stream from the equalized signal, which bit stream is transmitted to a demultiplexer 712. A demultiplexer 714 separates the bit stream into separate logical channels. A channel decodec 716 decodes the bit stream of different logical channels, i.e. decides whether the bit stream is signalling information to be further transmitted to a control unit 718, or whether the bit stream is speech to be further transmitted 720 to a speech codec (not shown). The channel codec 716 also performs error correction. The control unit 718 performs internal control tasks by controlling different units. A burst generator 722 adds a training sequence and tail bits to the data arriving from the channel codec 716. A modulator 724 modulates the digital signals to a radio-frequency carrier wave. The nature of this function is analogue, so that performing it requires digital/analogue converters 726. A transmitter 728 comprises a filter with which the bandwidth is reduced. In addition, the transmitter 728 controls the output power of the transmission. A synthesizer 730 arranges all required frequencies to different units. The clock contained in the synthesizer 730 can be locally controlled. The synthesizer 730 creates the required frequencies, for example by means of a voltage-controlled oscillator.

In the way illustrated by Figure 7, the structure of the transceiver can further divided into radio frequency parts 732 and a digital signal processor with software 734. The radio frequency parts 732 comprise a receiver 704, a transmitter 728 and a synthesizer 730. The digital signal processor with software 734 comprise an equalizer 708, a demodulator 710, a demultiplexer 712, a channel codec 716, a control unit 718, a burst generator 722 and a modulator 724. An analogue/digital converter 706 is required for converting an analogue radio signal into a digital one, and correspondingly, a digital/analogue converter 726 is required for converting a digital signal into an analogue one.

The equipment is arranged to be in connection with more than one radio system. Typically, this requires that the radio frequency parts be capable of generating the required frequencies, which may be different in different systems, and that the digital part of the equipment be capable of coding and decoding the possibly different signal forms of different systems.

Further, the equipment may comprise user interface parts, such as a display, a keyboard, an earpiece and a microphone. These are not, however, shown in the figure. The control unit 718 of the equipment is typically implemented with a microprocessor or with separate logic circuits with its memory elements, and with required software.

User equipment according to some preferred embodiments of the invention comprises means 732, 734 for receiving and detecting the paging message transmitted to it, the cell reselection process being started on the basis of the paging message, as described earlier.

Equipment according to preferred embodiments of the invention can also be a combination of user equipment described above and a portable computer connected thereto.

Although the invention has been described in the above with reference to the example according to the attached drawings, it is obvious that the invention is not restricted thereto but that it can be modified in a plurality of ways within the inventive idea defined in the attached claims.

## Claims

1. A call control method for user equipment (170) arranged to be in connection with more than one radio system (130, 160), which user equipment is under a first radio system and in which method the first system detects that there is a need to transfer data to the user equipment, **characterized by**
transmitting (410) a paging message from the first radio system to the user equipment, the message containing a command to move over to a second radio system cell;
starting (412) reselection of the cell in the user equipment on the basis of the message.

2. A method according to claim 1, **characterized by**
detecting (408) in the first system that the system is not capable of providing the user equipment with the required service; and
transmitting (410) a command to move over to the cell of the second radio system on the basis of the detection.

3. A method according to claim 1, **characterized by** the user equipment having logical connection to the first radio system.

4. A method according to claim 1, **characterized by** the user equipment being in the idle mode in the first radio system.

5. A method according to claim 1, **characterized by** the paging message comprising information on the second radio system cell to which the user equipment should move.

6. A method according to claim 1, **characterized in that** the paging message comprises information on the second system cells to which the user equipment can move.

7. A method according to claim 3, **characterized by** the first radio system being UMTS and the user equipment being in the CELL_PCH state.

8. A method according to claim 3, **characterized by** the first radio system being UMTS and the user equipment being in the URA_PCH state.

9. A method according to claim 4, **characterized by** the first radio system being GPRS and the user equipment being in the idle mode.

10. An arrangement for performing call control between a first and a second radio system (130, 160) for the user equipment, which comprises
means (732, 734) for being in connection with the first and the second radio system;
means (166, 140) in the radio system for detecting a need to transfer data to the user equipment;
**characterized in that** the arrangement comprises
means (140) in the first system for transmitting a paging message to the user equipment having logical connection to the system, the paging message comprising a command for the user equipment to move over to the cell of the second radio system;
means (732, 734) in the user equipment for starting the cell reselection process on the basis of the message.

11. An arrangement according to claim 10, **characterized in that** the system comprises
means (146) in the first radio system for detecting that the user equipment cannot be provided with the required service; and
means (140) for transmitting a command to move over to the cell of the second radio system on the basis of the detection.

12. An arrangement according to claim 10, **characterized in that** the first radio system is arranged to transmit a paging message comprising information on the second system cell to which the user equipment should move.

13. An arrangement according to claim 10, **characterized in that** the first radio system is arranged to transmit a paging message comprising information on the second system cells to which the user equipment can move.
